# EUROPÄISCHE PATENTSCHRIFT

(11) **EP 2 394 865 B1**
(45) Veröffentlichungstag und Bekanntmachung des Hinweises auf die Patenterteilung: **12.06.2019**
(21) Anmeldenummer: 11161855.9
(22) Anmeldetag: 11.04.2011
(51) Int. Cl.: B60R 21/017

(54) **Verfahren und Vorrichtung zur Diagnose einer Funktionsfähigkeit einer Energieversorgungseinrichtung**
Method and device for diagnosing the functioning of an energy supply device
Procédé et dispositif de diagnostic du fonctionnement d'un dispositif d'alimentation d'énergie

(30) Priorität: 29.10.2010 DE 102010043100; 10.06.2010 DE 102010029927
(43) Veröffentlichungstag der Anmeldung: 14.12.2011
(73) Patentinhaber: Robert Bosch GmbH, 70442 Stuttgart (DE)
(72) Erfinder: Jousse, Alain, 70192, Stuttgart (DE)

(56) Entgegenhaltungen:
- EP-A2- 0 752 592
- DE-A1- 19 815 391
- DE-A1- 19 837 167
- DE-A1-102004 010 135

## Beschreibung

### Stand der Technik

Die vorliegende Erfindung bezieht sich auf ein Verfahren zur Diagnose einer Funktionsfähigkeit einer Energieversorgungseinrichtung für eine Auslöseeinheit eines Personenschutzmittels eines Fahrzeugs, eine Vorrichtung zur Diagnose einer Funktionsfähigkeit einer Energieversorgungseinrichtung für eine Auslöseeinheit eines Personenschutzmittels eines Fahrzeugs, sowie ein Computerprogrammprodukt gemäß den unabhängigen Ansprüchen.

Um eine korrekte Auslösung von Insassensicherheitsmitteln eines Fahrzeugs wie beispielsweise Zündstufen einer Airbagsteuerung sicherzustellen, sollte eine Schaltung vorgesehen sein, die eine ausreichende Reserveenergie für die Auslösung dieses Sicherheitsmittels bereitstellt. Dies gilt insbesondere, wenn das Bordnetz eines Fahrzeugs bei einem Unfall ausfällt. Aus der DE 10 2004 010 135 A1 ist eine Vorrichtung zur Bestromung wenigstens einer Zündendstufe mittels eines Zündstroms aus einer Energiereserve (ER) offenbart, wobei zwischen der Energiereserve und der wenigstens einen Zündendstufe ein Spannungsregler vorgesehen ist, der eine Spannung an der wenigstens einen Zündendstufe auf einen vorgegebenen Wert einstellt. Jedoch besteht hier keine Möglichkeit eine ordnungsgemäße Funktion der Vorrichtung zur Bestromung zu kontrollieren.

Die EP 752592 A offenbart ein Verfahren und ein System zum Erkennen von Isolationsfehlern unter Verwendung einer Stromsenke.

### Offenbarung der Erfindung

Vor diesem Hintergrund wird mit der vorliegenden Erfindung ein verbessertes Verfahren zur Diagnose einer Funktionsfähigkeit einer Energieversorgungseinrichtung für eine Auslöseeinheit eines Personenschutzmittels eines Fahrzeugs, weiterhin eine verbesserte Vorrichtung zur Diagnose einer Funktionsfähigkeit einer Energieversorgungseinrichtung für eine Auslöseeinheit eines Personenschutzmittels eines Fahrzeugs sowie schließlich ein entsprechendes verbessertes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Diagnose einer Funktionsfähigkeit einer Energieversorgungseinrichtung für eine Auslöseeinheit eines Personenschutzmittels eines Fahrzeugs, wobei die Energieversorgungseinrichtung über eine Energieversorgungsleitung mit der Auslöseeinheit verbunden ist, wobei die Auslöseeinheit eine mit der Energieversorgungsleitung verbundene Stromsenke mit definierter Stromaufnahme aufweist, wobei die Energieversorgungseinrichtung und die Auslöseeinheit ausgebildet sind, um durch Steuersignale gesteuert zu werden, und wobei das Verfahren die folgenden Schritte aufweist:
- Starten einer Aufzeichnung eines zeitlichen Verlaufs eines Spannungspegels auf der Energieversorgungsleitung;
- Ansprechend auf ein erstes Steuersignal, Einleiten eines Stromflusses durch die Stromsenke in der Auslöseeinheit;
- Ansprechend auf ein zweites Steuersignal, welches nach einer vorbestimmten Zeitspanne nach dem ersten Steuersignal empfangen wird, Erhöhen oder Erniedrigen des Spannungspegels auf der Energieversorgungsleitung durch die Energieversorgungseinrichtung;
- Stoppen der Aufzeichnung des zeitlichen Verlaufs des Spannungspegels auf der Energieversorgungsleitung; und
- Zumindest abschnittsweises Vergleichen des erfassten zeitlichen Verlaufs mit einem erwarteten Spannungsverlauf, wobei die Funktionsfähigkeit der Energieversorgungseinrichtung verifiziert wird, wenn der zeitliche Verlauf innerhalb eines vorbestimmten Toleranzbereichs um den erwarteten Spannungsverlauf liegt.

Ferner schafft die vorliegende Erfindung eine Vorrichtung zur Diagnose einer Funktionsfähigkeit einer Energieversorgungseinrichtung für eine Auslöseeinheit eines Personenschutzmittels eines Fahrzeugs, wobei die Energieversorgungseinrichtung über eine Energieversorgungsleitung mit der Auslöseeinheit verbunden ist, wobei die Vorrichtung eine mit der Energieversorgungsleitung verbundene Stromsenke mit definierter Stromaufnahme aufweist, wobei die Energieversorgungseinrichtung und die Auslöseeinheit ausgebildet sind, um durch Steuersignale gesteuert zu werden, und wobei die Vorrichtung die folgenden Merkmale aufweist:
- eine Steuereinheit, die ausgebildet ist, um eine Aufzeichnung eines zeitlichen Verlaufs eines Spannungspegels auf der Energieversorgungsleitung zu starten und einen Stromfluss durch die Stromsenke in der Auslöseeinheit einzuleiten, ansprechend auf ein erstes Steuersignal; und
- eine Messeinheit zum Erfassen einer Erhöhung oder Erniedrigung des Spannungspegels auf der Energieversorgungsleitung;
- wobei die Steuereinheit ferner ausgebildet ist, um die Aufzeichnung des zeitlichen Verlaufs des Spannungspegels auf der Energieversorgungsleitung zu stoppen und den erfassten zeitlichen Verlauf mit einem erwarteten Spannungsverlauf zu vergleichen, wobei die Funktionsfähigkeit der Energieversorgungseinrichtung verifiziert wird, wenn der zeitliche Verlauf innerhalb eines vorbestimmten Toleranzbereichs um den erwarteten Spannungsverlauf liegt.

Über die zuschaltbare Stromsenke kann ein Defekt in der Auslöseeinheit simuliert werden. Durch dieses Zuschalten kann beispielsweise ein Fehlerstromfluss in der Auslöseeinheit nachgebildet werden, durch den ein Ausfall der Auslöseeinheit simuliert wird. Auf den durch das Zuschalten der Stromsenke simulierten Ausfall sollte die Energieversorgungseinrichtung mit einer Strombegrenzung auf der Energieversorgungsleitung reagieren, um eine unbeabsichtigte Auslösung der Auslöseeinheit zu verhindern. Die Energieversorgungseinheit stellt beispielsweise die (Reserve-)Energie zur Auslösung des Personenschutzmittels bereit. Die Steuersignale werden beispielsweise von einer Steuereinheit wie einem Mikrocontroller an die genannte Vorrichtung ausgesandt und lösen einzelne Schritte des Verfahrens aus. Durch die Aufzeichnung des zeitlichen Verlaufs des Spannungspegels auf der Energieversorgungsleitung wird eine Analyse der Reaktion der Energieversorgungseinrichtung auf unterschiedliche Steuerinformationen ermöglicht. Die Erhöhung des Spannungspegels auf der Energieversorgungsleitung durch die Energieversorgungseinheit, ansprechend auf das zweite Steuersignal bildet die erforderten Anforderungen an die Energieversorgungseinrichtung in einem Auslösefall der Personenschutzeinrichtung ab. Nach Ablauf einer vorbestimmten Zeitdauer wird der Spannungspegel durch die Energieversorgungseinrichtung auf einen hohen Wert gebracht und bei diesem hohen Wert über eine weitere Zeitspanne konstant gehalten. Der zumindest abschnittsweise Vergleich des erfassten zeitlichen Verlaufs des Spannungspegels mit einem vorbestimmten, erwarteten Spannungsverlauf ergibt Informationen über die Funktionsfähigkeit der Energieversorgungseinrichtung. Insbesondere dann, wenn sich ein Signal des erfassten zeitlichen Verlaufs aus einem Toleranzbereich um den erwarteten zeitlichen Verlauf hinaus bewegt, ist davon auszugehen, dass die Energieversorgungseinheit nicht korrekt funktioniert. Der Vergleich kann während der Aufzeichnung, also simultan, oder anschließend an die Aufzeichnung erfolgen.

Die vorliegende Erfindung basiert auf der Erkenntnis, dass die Funktionsfähigkeit einer Energieversorgungseinrichtung überprüft werden kann, wenn verschiedene Lastfälle und Anwendungssituationen der Energieversorgungseinrichtung simuliert werden und die Reaktion der Energieversorgungseinrichtung auf die verschiedene Lastfälle und Situationen mit vorab festgelegten Profilen, die eine korrekte Reaktion wiedergeben, verglichen werden. Weiterhin ist es möglich, eine Routine zur Prüfung der korrekten Reaktion der Energieversorgungseinrichtung in einem Verbraucher, typischerweise der Auslöseeinheit, mit einer direkten Verbindung zu der Energieversorgungseinrichtung zu integrieren.

Diese Lösung hat den Vorteil, dass ein Steuergerät, typischerweise die oben genannte Steuereinheit, für die Energieversorgungseinrichtung von Prozessen entlastet wird und die Steuerleitungen für die Energieversorgungseinrichtung bzw. für die Auslöseeinheit von Signalen befreit werden, die eine zur Verfügung stehende Datenmenge pro Zeit in den Steuerleitungen einschränken.

Zusätzlich kann eine gegenseitige Beeinflussung der Energieversorgungseinrichtung und der Auslöseeinheit durch eine Verringerung der Datenmenge und das Unterbinden von Kommunikation zwischen den beiden Einheiten vermieden werden.

Gemäß einer besonderen Ausführungsform der vorliegenden Erfindung wird im Schritt des Vergleichens die Funktionsfähigkeit der Energieversorgungseinrichtung verifiziert, wenn der Spannungspegel vor dem Einleiten des Stromflusses durch die Stromsenke innerhalb des vorbestimmten Toleranzbereichs liegt, wobei sich der vorbestimmte Toleranzbereich vor dem Einleiten des Stromflusses durch die Stromsenke von einem maximalen Mittelpegel bis zu einem minimalen Mittelpegel erstreckt. Durch Einhalten eines Toleranzbereichs für den Spannungspegel bereits vor dem Schalten der Stromsenke kann eine Diagnose einer ordnungsgemäßen Funktion von Baugruppen in der Energieversorgungseinrichtung, die nicht durch eine Überprüfung während des hohen Spannungsniveaus möglich ist, durchgeführt werden.

Ferner kann gemäß einem weiteren Ausführungsform der Erfindung im Schritt des Vergleichens die Funktionsfähigkeit der Energieversorgungseinrichtung verifiziert werden, wenn der Spannungspegel nach dem Einleiten des Stromflusses durch die Stromsenke innerhalb des vorbestimmten Toleranzbereichs liegt, wobei sich der vorbestimmte Toleranzbereich nach dem Einleiten des Stromflusses durch die Stromsenke von einem maximalen Tiefpegel bis zu einem minimalen Tiefpegel erstreckt und der vorbestimmte Toleranzbereich nach dem Einleiten des Stromflusses durch die Stromsenke innerhalb einer vorbestimmten Zeitspanne erreicht wird. Der Tiefpegel der nach Aktivieren der Spannungssenke erreicht werden soll, soll eine mögliche fälschliche Auslösung der Auslöseeinheit im Fall einer Fehlfunktion der Auslöseeinheit verhindern. Der Spannungspegel des Tiefpegels liegt im Bereich um einen Nullpunkt der Spannung auf der Energieversorgungsleitung. Der maximale Tiefpegel sollte nicht überschritten werden, während die zugeschaltete Stromsenke eine Fehlfunktion der Auslöseeinheit simuliert. Die vorbestimmte Zeitspanne soll eine rasche Reaktion der Energieversorgungseinrichtung auf einen Ausfall der Auslöseeinheit sicherstellen.

Um eine eindeutige Aussage über den erreichten Spannungspegel treffen zu können sollten die durch die maximalen und minimalen Pegel definierten Spannungspegelbereiche ohne Überschneidung zueinander liegen. Dies kann insbesondere dadurch sichergestellt werden, wenn in einer Ausführungsform der maximale Tiefpegel unterhalb des minimalen Mittelpegels liegt.

Gemäß einer weiteren Ausführungsform der vorliegenden Erfindung wird im Schritt des Vergleichens die Funktionsfähigkeit der Energieversorgungseinrichtung verifiziert, wenn der Spannungspegel nach dem Erhöhen des Spannungspegels innerhalb des vorbestimmten Toleranzbereichs liegt, wobei sich der vorbestimmte Toleranzbereich nach dem Erhöhen des Spannungspegels von einem maximalen Hochpegel bis zu einem minimalen Hochpegel erstreckt und der vorbestimmte Toleranzbereich nach dem Erhöhen des Spannungspegels innerhalb einer vorbestimmten Zeitdauer erreicht wird. Dabei kann die vorbestimmte Zeitdauer insbesondere so gewählt werden, dass eine Auslösung des Personenschutzmittels unterbleibt. Der Hochpegel des Spannungspegels stellt beispielsweise den optimalen Spannungspegel für eine gesicherte Funktion der Auslöseeinheit, d.h. einen Spannungspegel, der eine zuverlässige Auslösung des Personenschutzmittels gewährleistet, dar. Wird der maximale Hochpegel weit überschritten, so kann ein Schaden an der Auslöseeinheit drohen.

Um eine eindeutige Signalauswertung zu gewährleisten sollte gemäß einer anderen Ausführungsform der Erfindung der maximale Mittelpegel unterhalb des minimalen Hochpegels liegen.

Ferner kann im Schritt des Vergleichens die Funktionsfähigkeit der Energieversorgungseinrichtung verifiziert werden, wenn der Spannungspegel nach einem Ende des zweiten Steuersignals innerhalb des vorbestimmten Toleranzbereichs liegt, wobei sich der vorbestimmte Toleranzbereich nach einem Ende des zweiten Steuersignals von einem maximalen Mittelpegel bis zu einem minimalen Mittelpegel erstreckt. Nach Durchführung des Funktionstests soll die an der Versorgungsleitung anliegende Spannung wieder den Ausgangszustand vor dem Funktionstest erreichen. Dadurch kann die Funktionstüchtigkeit der Energieversorgungseinrichtung auch nach dem Funktionstest verifiziert werden.

Gemäß einer weiteren Ausführungsform werden die Aufzeichnung des zeitlichen Spannungsverlaufs in der Energieversorgungsleitung und/oder der Schritt des Vergleichens des erfassten zeitlichen Verlaufs mit dem erwarteten Spannungsverlauf von der Auslöseeinheit durchgeführt. Dadurch ist eine kompakte Diagnoseeinheit möglich und die Auslöseeinheit stellt eine Sicherungseinrichtung für die Energieversorgungseinrichtung dar. Zusätzlich wird eine Steuereinheit von Aufgaben des Prüfens der Funktionsfähigkeit der Energieversorgungseinheit entlastet und die die Steuereinheit, die Energieversorgungseinheit sowie die Auslöseeinheit verbindenden Steuerleitungen werden von unnötigem oder übermäßigem Informationsfluss freigehalten.

Von Vorteil ist auch ein Computerprogrammprodukt mit Programmcode, zur Durchführung des Verfahrens nach einem der vorstehend beschriebenen Ausführungsformen verwendet wird, wenn das Programm auf einer Vorrichtung ausgeführt wird.

Die Erfindung wird anhand der beigefügten Zeichnungen beispielhaft näher erläutert. Es zeigen:
- Fig. 1: ein Blockschaltbild von verschalteten Komponenten, die zur Ausführung eines Beispiels der vorliegenden Erfindung verwendet werden können.;
- Fig. 2a: drei Diagramme zur zeitlichen Darstellung einer Abfolge von Signalen bei der beispielshaften Ausführung eines erfindungsgemäßen Verfahrens;
- Fig. 2b: drei Diagramme zur zeitlichen Darstellung einer Abfolge von Signalen bei der weiteren beispielshaften Ausführung eines erfindungsgemäßen Verfahrens;
- Fig. 2c: drei Diagramme zur zeitlichen Darstellung einer Abfolge von Signalen bei einer weiteren beispielshaften Ausführung eines erfindungsgemäßen Verfahrens;
- Fig. 3: eine Detaildarstellung von einer Auslöseeinheit mit einem Ausführungsbeispiel der vorliegenden Erfindung; und
- Fig. 4: ein Ablaufdiagramm eines Ausführungsbeispiels der vorliegenden Erfindung als Verfahren.

Gleiche oder ähnliche Elemente können in den Figuren durch gleiche oder ähnliche Bezugszeichen versehen sein, wobei auf eine wiederholte Beschreibung verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal/Schritt und einem zweiten Merkmal/Schritt, so kann dies so gelesen werden, dass das Ausführungsbeispiel gemäß einer Ausführungsform sowohl das erste Merkmal / den ersten Schritt als auch das zweite Merkmal /den zweiten Schritt und gemäß einer weiteren Ausführungsform entweder nur das erste Merkmal /Schritt oder nur das zweite Merkmal /Schritt aufweist.

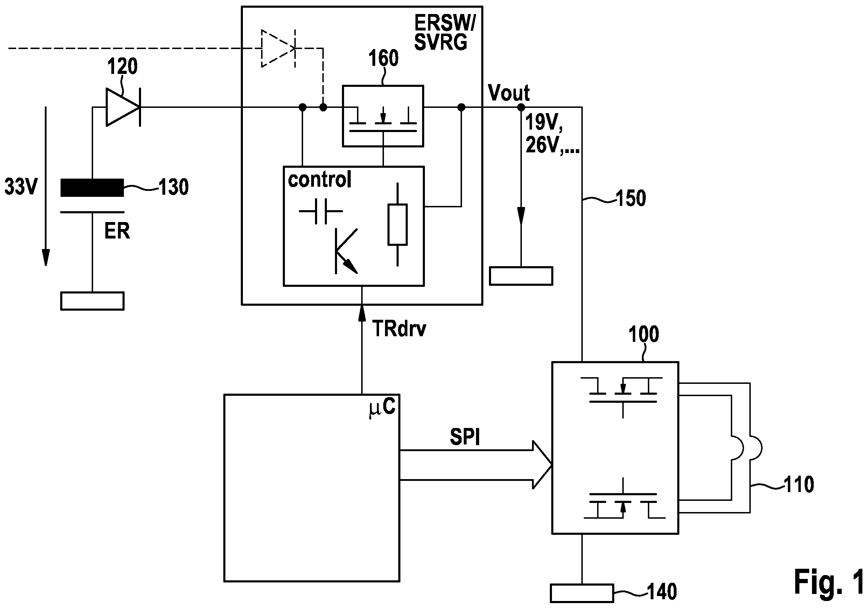

Fig. 1 zeigt eine Darstellung der Anordnung von mehreren Komponenten, die für die Ausführung der vorliegenden Erfindung verwendet werden kann. Insbesondere ist ein Mikrocontroller µC dargestellt, der über einen SPI-Bus, der zumindest eine Steuersignalleitung aufweist, mit einer Auslöseeinheit 100 für ein Personenschutzmittel 110, beispielsweise eines Airbags eines Fahrzeugs verbunden ist. Weiterhin ist der Mikrocontroller µC über eine weitere Steuersignalleitung TRdrv mit einer Energieversorgungseinheit ERSW verbunden. Die Energieversorgungseinheit ERSW ist gemäß der Darstellung aus Fig.1 über eine Diode 120 sowie eine Pufferkapazität 130 mit der elektrischen Masse 140 verbunden. An der Pufferkapazität 130 kann eine Spannung zwischen 25 V und 33 V, insbesondere von 33 V, anliegen. Die Energieversorgungseinheit ERSW ist über eine Energieversorgungsleitung 150 mit der Auslöseeinheit 100 verbunden, die selbst wiederum über die elektrische Maße 140 geerdet ist. Die Energieversorgungseinheit ERSW umfasst ein Spannungsüberwachungselement oder Spannungsregelungselement 160, vorliegen beispielsweise in Form eines Feldeffekttransistors, das zwischen die Diode 120 und die Energieversorgungsleitung 150 geschaltet ist und das sicherstellt, dass die maximale Spannung Vout auf der Energieversorgungsleitung 150 einen konfigurierbaren Betrag von von 19V , 26 V oder einen anderen Wert nicht übersteigt.

Wird nun eine Aktivierung des Personenschutzmittels 110 eingeleitet, erfolgt dies durch eine Übertragung von entsprechenden an Steuersignalen von dem Mikrocontroller µC an die Auslöseeinheit 100 sowie die Energieversorgungseinheit ERSW. Für diesen Fall sollte sichergestellt sein, dass die Auslöseeinheit 100 eine ausreichende Menge von Energie zur Verfügung hat, um das Personenschutzmittel 110 zuverlässig aktivieren zu können. Insbesondere bei einem Ausfall des Bordnetzes eines Fahrzeugs nach einem Unfall ist dies manchmal problematisch, so dass die Energie zur Auslösung des Personenschutzmittels 110 in der Auslöseeinheit 100 meist durch eine ausreichend groß dimensionierte Pufferkapazität 130 bereitgestellt wird, die auch beim Ausfall des Bordnetzes des Fahrzeugs zuverlässig die erforderliche Auslöseenergie zur Verfügung stellt. In diesem Fall wird das Steuerelement 160 benötigt, um einen Energiefluss von der Pufferkapazität 130 über die Diode 120 sowie das Steuerelement 160 und die Energieversorgungsleitung 150 in die Auslöseeinheit 100 zu ermöglichen, wobei die maximale Spannung von 25 V auf der Energieversorgungsleitung nicht überschritten werden sollte, um Komponenten der Auslöseeinheit 100 nicht zu beschädigen.

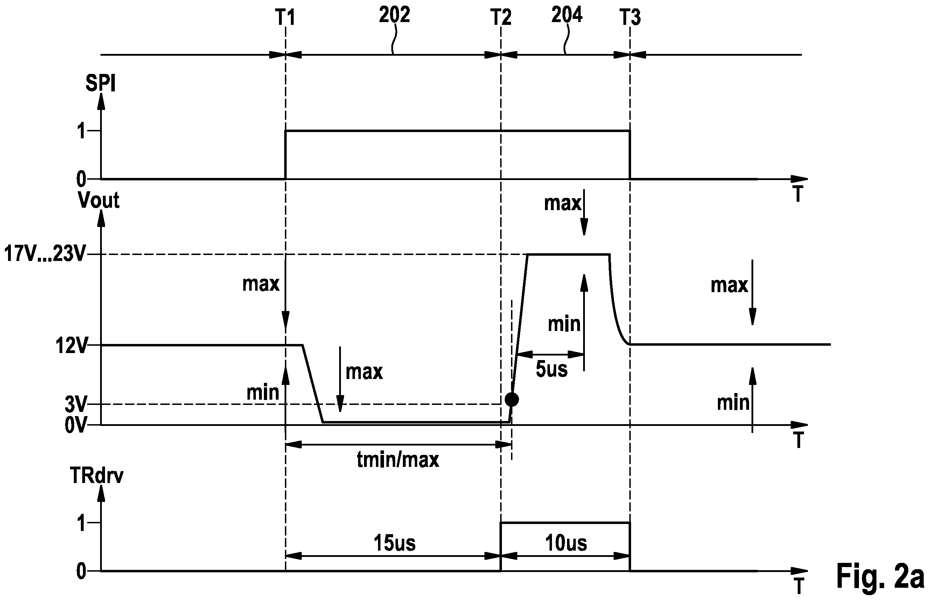

Um die korrekte Funktionalität der Energieversorgungseinheit ERSW des Fahrzeugs sicherzustellen, sollte die Energieversorgungseinheit ERSW bei jeder Inbetriebnahme des Fahrzeugs auf mögliche Fehler überprüft werden. Dies kann durch eine Vorgehensweise erfolgen, wie sie unter Zuhilfenahme der Diagramme aus den Figuren 2a bis 2c näher beschrieben wird.

Die Fig. 2a zeigt in einem oberen Teildiagramm einen zeitlichen Signalverlauf eines binären Signals auf einer Steuersignalleitung SPI des SPI-Busses von dem Mikrocontroller zu Auslöseeinheit. In dem unteren Teildiagramm in Fig. 2a ist ein zeitlicher Signalverlauf eines Signals auf der Steuerleitung TRdrv von dem Mikrocontroller zu Energieversorgungseinheit dargestellt. Das mittlere Teildiagramm zeigt einen erwarteten Signalverlauf eines Spannungspegels auf der Energieversorgungsleitung zwischen der Energieversorgungseinheit und der Auslöseeinheit, wobei ein Toleranzbereich um diesen erwarteten Signalverlauf durch die Darstellung der Pfeile "max" und "min" dargestellt ist, die eine entsprechende Obergrenze bzw. Untergrenze des Toleranzbereichs im jeweiligen Zeitabschnitt markieren.

Für die Diagnose der Funktionsfähigkeit der Energieversorgungseinheit wird gemäß dem hier beschriebenen Ausführungsbeispiel in der Auslöseeinheit die Spannung auf der Energieversorgungsleitung ausgelesen und (eventuell auch zeitabschnittsweise) mit dem erwarteten Signalverlauf verglichen. Nachdem beispielsweise in der Auslöseeinheit festgestellt wurde, dass die Energieversorgungseinheit korrekt funktioniert, kann ein entsprechendes Ergebnissignal (beispielsweise auch in binäre Form) an den Mikrocontroller zurückgesendet werden, der durch eine solche Vorgehensweise deutlich entlastet werden kann.

Zunächst wird in der Auslöseeinheit durch eine entsprechende Messeinheit ein Spannungspegel auf der Energieversorgungsleitung gemessen, wobei in einem Leerlauf-Betriebszustand der Energieversorgungseinheit dieser Spannungspegel gemäß dem in Fig. 2a dargestellten erwarteten Signalverlauf 12 V beträgt. Auch bei einer korrekten Funktion der Energieversorgungseinheit kann der Spannungspegel auf der Energieversorgungsleitung vor dem Zeitpunkt T1 innerhalb des Toleranzbereichs schwanken, der durch die genannten Begrenzungspfeile "max" und "min" gekennzeichnet ist. Zu dem Zeitpunkt T1 wird dann vom Mikrocontroller über die Steuersignalleitung des SPI-Busses eine steigende Signalflanke auf einen Pegel "logisch 1" gesetzt. Dies bewirkt, dass in der Auslöseeinheit eine Stromsenke mit einer definierten Stromaufnahme zwischen die Energieversorgungsleitung und die elektrische Masse geschaltet wird. Diese Stromsenke kann beispielsweise durch einen Stromspiegel oder ähnliche, dem Fachmann bekannte Elemente für eine Stromsenke realisiert sein. Durch den nun definierten Stromfluss auf der Energieversorgungsleitung kann die Energieversorgungseinheit den Testfall erkennen und wird den Spannungspegel auf der Energieversorgungsleitung auf einen sehr niedrigen Bereich (Tiefpegel), insbesondere auf 0 Volt, absenken. Bei einer korrekten Funktion der der Energieversorgungseinheit sollte der durch die Messeinheit auf der Energieversorgungsleitung erfasste Spannungspegel dann nach dem Zeitpunkt T1 innerhalb einer vorbestimmten Zeitspanne von tmin/max erreicht werden. Dabei kann das Erreichen dieses niedrigen Spannungspegels (d.h. des Tiefpegels) dann als vorliegend erkannt werden, wenn der tatsächliche Spannungspegel auf der Energieversorgungsleitung im Zeitintervall 202 (beispielsweise innerhalb 15 µs) nach dem Zeitpunkt T1 zwischen 0 Volt und einer Obergrenze des Toleranzbereichs in dem Zeitintervall 202 (beispielsweise 3 V) liegt. In diesem Fall hat die Energieversorgungseinheit den definierten Stromfluss auf eine die Versorgungsleitung korrekt erkannt und funktioniert somit korrekt. Um eine eindeutige Erkennung der entsprechenden Signalzustände zu erreichen, sollte die untere Grenze des Toleranzbereichs vor dem Zeitpunkt T1 größer sein, als die obere Grenze des Toleranzbereichs nach dem Zeitpunkt T1.

Weiterhin auch eine Auslösesituation in der Auslöseeinheit simuliert werden und die korrekte Funktion der Energieversorgungseinheit auch in diesem Zustand geprüft werden. Hierzu wird zu einem zweiten Zeitpunkt T2, bei dem noch immer ein Spannungspegel auf der Steuerleitung des SPI-Busses auf "logisch 1" gesetzt ist, über die zweite Steuerleitung TRdrv vom Mikrocontroller zur Energieversorgungseinheit eine steigende Signalflanke gesendet, so dass die Energieversorgungseinheit über die zweite Steuerleitung einen Pegel von "logisch 1" erhält. Dies entspricht einem Auslösesignal zur Auslösung des Personenschutzmittels in einem realen Szenario. In diesem Zustand soll nun die Energieversorgungseinheit den Spannungspegel auf der Versorgungsleitung auf einen sehr hohen Wert (auch als Hochpegel bezeichnet) setzen, um der Auslöseeinheit möglichst schnell ausreichend Energie zur (vermeintlichen) Zündung oder Aktivierung des Personenschutzmittels zur Verfügung zu stellen. Die korrekte Funktion der Energieversorgungseinheit kann dann verifiziert werden, wenn erkannt wird, dass der Spannungspegel auf der Energieversorgungsleitung innerhalb eines vorbestimmten Zeitintervalls ab einem Überschreiten der Obergrenze des Toleranzbereichs vor dem zweiten Zeitpunkt T2 innerhalb eines Toleranzbereichs um den Hochpegel liegt. Im vorliegenden Ausführungsbeispiel beträgt dieses vorbestimmter Zeitintervall beispielsweise 5 µs. Der Toleranzbereich um den Hochpegel kann ein Bereich um die Spannungen 23 V oder 17 V sein.

Nachdem der Spannungspegel auf der Energieversorgungsleitung innerhalb des vorbestimmten Zeitintervalls den Toleranzbereich um den Hochpegel erreicht hat, kann er wieder auf den ursprünglichen Pegel im Leerlauf-Betriebszustand (Mittelpegel) absinken. Zu einem dritten Zeitpunkt T3, der beispielsweise nach einem zweiten Zeitintervall 204 von 10 µs nach dem zweiten Zeitpunkt T2 liegt, wird vom Mikrocontroller der Spannungspegel auf der Steuerleitung des SPI-Busses sowie der zweiten Steuerleitung TRdrv zu Energieversorgungseinheit auf den Logikpegel 0 zurückgesetzt. Die korrekte Funktion der Energieversorgungseinheit kann auch dann wieder festgestellt werden, wenn der Spannungspegel auf der die Versorgungsleitungen innerhalb eines Toleranzbereichs um den Mittelbereich liegt.

Zur Feststellung der korrekten Funktion der Energieversorgungseinheit kann entweder der durch die Messeinheit erfasste tatsächliche Signalverlauf oder einzelner Werte davon abschnittsweise, beispielsweise im ersten Zeitintervall 202 oder im zweiten Zeitintervall 204 oder über die gesamte in Fig. 2a dargestellte Auswertezeit mit dem erwarteten Signalverlauf oder einzelnen Werten davon verglichen werden. Um den Mikrocontroller zu entlasten, kann dieser Vergleich in einem speziellen Modul der Auslöseeinheit implementiert werden. Das Ergebnis kann entweder ansprechend auf ein Ausgabesignal des Mikrocontrollers oder nach Vorliegen in dem betreffenden Modul, beispielsweise ebenfalls über den SPI-Bus an den Mikrocontroller zurückübertragen werden, der dieses Ergebnissignal dann entsprechend ausliest und weiterverarbeitet.

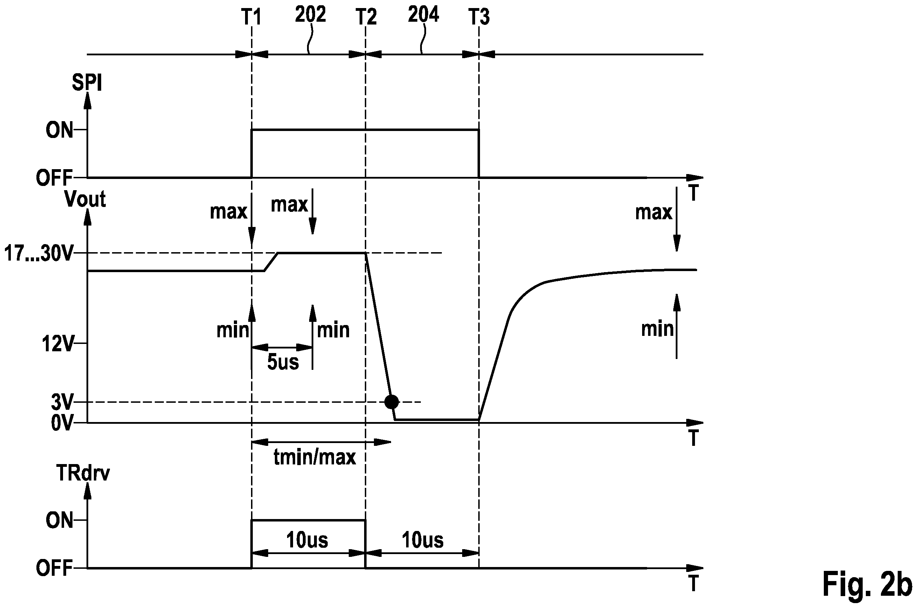

Die Fig. 2b zeigt in einem oberen Teildiagramm einen zeitlichen Signalverlauf eines binären Signals auf einer Steuersignalleitung SPI des SPI-Busses von dem Mikrocontroller zu Auslöseeinheit. In dem unteren Teildiagramm in Fig. 2b ist ein zeitlicher Signalverlauf eines Signals auf der Steuerleitung TRdrv von dem Mikrocontroller zu Energieversorgungseinheit dargestellt. Das mittlere Teildiagramm zeigt einen erwarteten Signalverlauf eines Spannungspegels auf der Energieversorgungsleitung zwischen der Energieversorgungseinheit und der Auslöseeinheit, wobei ein Toleranzbereich um diesen erwarteten Signalverlauf durch die Darstellung der Pfeile "max" und "min" dargestellt ist, die eine entsprechende Obergrenze bzw. Untergrenze des Toleranzbereichs im jeweiligen Zeitabschnitt markieren.

Für die Diagnose der Funktionsfähigkeit der Energieversorgungseinheit wird gemäß dem hier beschriebenen Ausführungsbeispiel in der Auslöseeinheit die Spannung auf der Energieversorgungsleitung ausgelesen und (eventuell auch zeitabschnittsweise) mit dem erwarteten Signalverlauf verglichen. Nachdem beispielsweise in der Auslöseeinheit festgestellt wurde, dass die Energieversorgungseinheit korrekt funktioniert, kann ein entsprechendes Ergebnissignal (beispielsweise auch in binäre Form) an den Mikrocontroller zurückgesendet werden, der durch eine solche Vorgehensweise deutlich entlastet werden kann.

Zunächst wird in der Auslöseeinheit durch eine entsprechende Messeinheit ein Spannungspegel auf der Energieversorgungsleitung gemessen, wobei in einem Leerlauf-Betriebszustand der Energieversorgungseinheit dieser Spannungspegel gemäß dem in Fig. 2b dargestellten erwarteten Signalverlauf etwa 15 bis 16 V beträgt. Auch bei einer korrekten Funktion der Energieversorgungseinheit kann der Spannungspegel auf der Energieversorgungsleitung vor dem Zeitpunkt T1 innerhalb des Toleranzbereichs schwanken, der durch die genannten Begrenzungspfeile "max" und "min" gekennzeichnet ist. Zu dem Zeitpunkt T1 wird dann vom Mikrocontroller das SPI-Bus einen Pegel "logisch 1" gesetzt. Hierdurch kann eine Auslösesituation in der Auslöseeinheit simuliert werden und die korrekte Funktion der Energieversorgungseinheit in diesem Zustand geprüft werden. Dazu wird zu dem ersten Zeitpunkt T1, bei dem noch immer ein Spannungspegel auf der Steuerleitung des SPI-Busses auf "logisch 1" gesetzt ist, über die zweite Steuerleitung TRdrv vom Mikrocontroller zur Energieversorgungseinheit eine steigende Signalflanke gesendet, so dass die Energieversorgungseinheit über die zweite Steuerleitung einen Pegel von "logisch 1" erhält. Dies entspricht einem Auslösesignal zur Auslösung des Personenschutzmittels in einem realen Szenario. In diesem Zustand soll nun die Energieversorgungseinheit den Spannungspegel auf der Versorgungsleitung auf einen sehr hohen Wert (auch als Hochpegel bezeichnet) setzen, um der Auslöseeinheit möglichst schnell ausreichend Energie zur (vermeintlichen) Zündung oder Aktivierung des Personenschutzmittels zur Verfügung zu stellen. Die korrekte Funktion der Energieversorgungseinheit kann dann verifiziert werden, wenn erkannt wird, dass der Spannungspegel auf der Energieversorgungsleitung innerhalb eines vorbestimmten Zeitintervalls ab einem Überschreiten der Obergrenze des Toleranzbereichs nach dem ersten Zeitpunkt T1 innerhalb eines ebenfalls durch die Pfeile "max" und "min" gekennzeichneten Toleranzbereichs um den Hochpegel liegt. Im vorliegenden Ausführungsbeispiel gemäß der Darstellung aus Fig. 2b beträgt dieses vorgebestimmte Zeitintervall beispielsweise 5 µs. Der Toleranzbereich um den Hochpegel kann ein Bereich um die Spannungen 17 V oder 30 V sein.

Zu einem zweiten Zeitpunkt T2, der beispielsweise nach einer Zeitspanne von 10µs nach dem ersten Zeitpunkt T1 liegt, wird der Signalpegel auf der Steuerleitung "TRdrv" vom Mikrocontroller zur Energieversorgungseinheit auf einen sehr niedrigen Pegel, insbesondere auf eine Pegel logisch 0 gelegt, wobei das Signal SPI noch immer auf einem Pegel von logisch 1 verbleibt. Dies bewirkt, dass in der Auslöseeinheit eine Stromsenke mit einer definierten Stromaufnahme zwischen die Energieversorgungsleitung und die elektrische Masse geschaltet wird. Diese Stromsenke kann beispielsweise durch einen Stromspiegel oder ähnliche, dem Fachmann bekannte Elemente für eine Stromsenke realisiert sein. Durch den nun definierten Stromfluss auf der Energieversorgungsleitung kann die Energieversorgungseinheit den Testfall erkennen und wird den Spannungspegel auf der Energieversorgungsleitung auf einen sehr niedrigen Bereich (Tiefpegel), insbesondere auf 0 Volt, absenken.

Bei einer korrekten Funktion der der Energieversorgungseinheit sollte der durch die Messeinheit auf der Energieversorgungsleitung erfasste Spannungspegel dann nach dem Zeitpunkt T1 innerhalb einer vorbestimmten Zeitspanne von tmin/max erreicht werden. Dabei kann das Erreichen dieses niedrigen Spannungspegels (d.h. des Tiefpegels) dann als vorliegend erkannt werden, wenn der tatsächliche Spannungspegel auf der Energieversorgungsleitung im Zeitintervall 204 (beispielsweise innerhalb 15 µs) nach dem Zeitpunkt T1 zwischen 0 Volt und einer Obergrenze des Toleranzbereichs in dem Zeitintervall 204 (beispielsweise 3 V) liegt. In diesem Fall hat die Energieversorgungseinheit den definierten Stromfluss auf der Versorgungsleitung korrekt erkannt und funktioniert somit korrekt. Um eine eindeutige Erkennung der entsprechenden Signalzustände zu erreichen, sollte die untere Grenze des Toleranzbereichs vor dem Zeitpunkt T2 größer sein, als die obere Grenze des Toleranzbereichs nach dem Zeitpunkt T2.

Nachdem der Spannungspegel auf der Energieversorgungsleitung innerhalb des vorbestimmten Zeitintervalls den Toleranzbereich um den Tiefpegel erreicht hat, kann er wieder auf den ursprünglichen Pegel im Leerlauf-Betriebszustand (Mittelpegel) ansteigen. Dies erfolgt, nachdem zu einem dritten Zeitpunkt T3, der beispielsweise nach einem zweiten Zeitintervall 204 von 10 µs nach dem zweiten Zeitpunkt T2 liegt, vom Mikrocontroller der Spannungspegel auf der Steuerleitung des SPI-Busses sowie der Steuerleitung TRdrv zu Energieversorgungseinheit auf den Logikpegel 0 zurückgesetzt wird. Die korrekte Funktion der Energieversorgungseinheit kann auch dann wieder festgestellt werden, wenn der Spannungspegel auf der die Versorgungsleitungen innerhalb eines Toleranzbereichs um den Mittelbereich liegt, der beispielsweise in dem Bereich von 15V bis 16V liegt.

Zur Feststellung der korrekten Funktion der Energieversorgungseinheit kann entweder der durch die Messeinheit erfasste tatsächliche Signalverlauf oder einzelner Werte davon abschnittsweise, beispielsweise im ersten Zeitintervall 202 oder im zweiten Zeitintervall 204 oder über die gesamte in Fig. 2b dargestellte Auswertezeit mit dem erwarteten Signalverlauf oder einzelnen Werten davon verglichen werden. Um den Mikrocontroller zu entlasten, kann dieser Vergleich in einem speziellen Modul der Auslöseeinheit implementiert werden. Das Ergebnis kann entweder ansprechend auf ein Ausgabesignal des Mikrocontrollers oder nach Vorliegen in dem betreffenden Modul, beispielsweise ebenfalls über den SPI-Bus an den Mikrocontroller zurückübertragen werden, der dieses Ergebnissignal dann entsprechend ausliest und weiterverarbeitet.

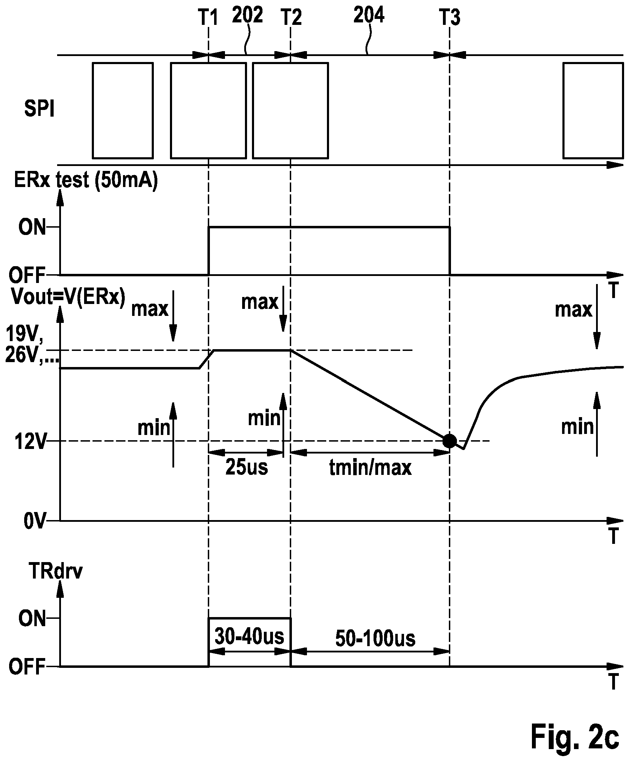

Die Fig. 2c zeigt in einem oberen Teildiagramm einen zeitlichen Signalverlauf eines binären Signals auf einer Steuersignalleitung SPI des SPI-Busses von dem Mikrocontroller zu Auslöseeinheit. Dieses Signal entspricht dem Fehlertestsignal, bei dem die Zündung des Personenschutzmittels 110 simuliert werden soll und bei dem ein Simulationsfall 50 mA über die Energieversorgungsleitung fließen sollen. In dem unteren Teildiagramm in Fig. 2c ist ein zeitlicher Signalverlauf eines Signals auf der Steuerleitung TRdrv von dem Mikrocontroller zu Energieversorgungseinheit dargestellt. Das mittlere Teildiagramm zeigt einen erwarteten Signalverlauf eines Spannungspegels auf der Energieversorgungsleitung zwischen der Energieversorgungseinheit und der Auslöseeinheit, wobei ein Toleranzbereich um diesen erwarteten Signalverlauf durch die Darstellung der Pfeile "max" und "min" dargestellt ist, die eine entsprechende Obergrenze bzw. Untergrenze des Toleranzbereichs im jeweiligen Zeitabschnitt markieren.

Für die Diagnose der Funktionsfähigkeit der Energieversorgungseinheit wird gemäß dem hier beschriebenen Ausführungsbeispiel in der Auslöseeinheit die Spannung auf der Energieversorgungsleitung ausgelesen und (eventuell auch zeitabschnittsweise) mit dem erwarteten Signalverlauf verglichen. Nachdem beispielsweise in der Auslöseeinheit festgestellt wurde, dass die Energieversorgungseinheit korrekt funktioniert, kann ein entsprechendes Ergebnissignal (beispielsweise auch in binäre Form) an den Mikrocontroller zurückgesendet werden, der durch eine solche Vorgehensweise deutlich entlastet werden kann.

Zunächst wird in der Auslöseeinheit durch eine entsprechende Messeinheit ein Spannungspegel auf der Energieversorgungsleitung gemessen, wobei in einem Leerlauf-Betriebszustand der Energieversorgungseinheit dieser Spannungspegel gemäß dem in Fig. 2c dargestellten erwarteten Signalverlauf etwa 19 bis 26 V beträgt. Auch bei einer korrekten Funktion der Energieversorgungseinheit kann der Spannungspegel auf der Energieversorgungsleitung vor dem Zeitpunkt T1 innerhalb des Toleranzbereichs schwanken, der durch die genannten Begrenzungspfeile "max" und "min" gekennzeichnet ist. Zu dem Zeitpunkt T1 wird dann vom Mikrocontroller über das SPI-Bus einen Pegel "logisch 1" gesetzt, um die Einleitung des Fehlertests (ERx test auf ON) zu signalisieren. Hierdurch kann eine Auslösesituation in der Auslöseeinheit simuliert werden und die korrekte Funktion der Energieversorgungseinheit in diesem Zustand geprüft werden. Dazu wird zu dem ersten Zeitpunkt T1 über die zweite Steuerleitung TRdrv vom Mikrocontroller zur Energieversorgungseinheit eine steigende Signalflanke gesendet, so dass die Energieversorgungseinheit über die zweite Steuerleitung einen Pegel von "logisch 1" erhält. Dies entspricht einem Auslösesignal zur Auslösung des Personenschutzmittels in einem realen Szenario. In diesem Zustand soll nun die Energieversorgungseinheit den Spannungspegel auf der Versorgungsleitung auf einen sehr hohen Wert (auch als Hochpegel bezeichnet) setzen, um der Auslöseeinheit möglichst schnell ausreichend Energie zur (vermeintlichen) Zündung oder Aktivierung des Personenschutzmittels zur Verfügung zu stellen. Hierzu kann bereits kurz vor dem Setzen der Signale TRdrv und ERx test ein Pegel auf der Energieversorgungsleitung auf den gewüsnchten Hochpegel gesetzt werden, da die Kenntnis, wann das entsprechende Fehlersimulationssignal ERx test auf logisch 1 gesetzt werden soll bereits in dem Mikrocontroller bekannt ist.

Die korrekte Funktion der Energieversorgungseinheit kann dann verifiziert werden, wenn erkannt wird, dass der Spannungspegel auf der Energieversorgungsleitung innerhalb eines vorbestimmten Zeitintervalls ab einem Überschreiten der Obergrenze des Toleranzbereichs nach dem ersten Zeitpunkt T1 innerhalb eines ebenfalls durch die Pfeile "max" und "min" gekennzeichneten Toleranzbereichs um den Hochpegel liegt. Im vorliegenden Ausführungsbeispiel gemäß der Darstellung aus Fig. 2c beträgt dieses vorgebestimmte Zeitintervall beispielsweise 25 µs. Der Toleranzbereich um den Hochpegel kann ein Bereich um die Spannungen 17 V oder 33 V betragen.

Zu einem zweiten Zeitpunkt T2, der beispielsweise nach einer Zeitspanne von 30 bis 40 µs nach dem ersten Zeitpunkt T1 liegt, wird der Signalpegel auf der Steuerleitung "TRdrv" vom Mikrocontroller zur Energieversorgungseinheit auf einen sehr niedrigen Pegel, insbesondere auf eine Pegel "logisch 0" gelegt, wobei das Signal SPI noch immer auf einem Pegel von logisch 1 verbleibt. Dies bewirkt, dass in der Auslöseeinheit eine Stromsenke mit einer definierten Stromaufnahme zwischen die Energieversorgungsleitung und die elektrische Masse geschaltet wird. Diese Stromsenke kann beispielsweise durch einen Stromspiegel oder ähnliche, dem Fachmann bekannte Elemente für eine Stromsenke realisiert sein. Durch den nun definierten Stromfluss auf der Energieversorgungsleitung kann die Energieversorgungseinheit den Testfall erkennen und wird den Spannungspegel auf der Energieversorgungsleitung auf einen sehr niedrigen Bereich (Tiefpegel), insbesondere auf 12 Volt, absenken.

Bei einer korrekten Funktion der Energieversorgungseinheit sollte der durch die Messeinheit auf der Energieversorgungsleitung erfasste Spannungspegel dann nach dem Zeitpunkt T2 innerhalb einer vorbestimmten Zeitspanne von tmin/max erreicht werden. Dabei kann das Erreichen dieses niedrigen Spannungspegels (d.h. des Tiefpegels) dann als vorliegend erkannt werden, wenn der tatsächliche Spannungspegel auf der Energieversorgungsleitung im Zeitintervall 204 (beispielsweise innerhalb 50 bis 100 µs) nach dem Zeitpunkt T2 den Niedrigpegel von beispielsweise 12 V erreicht hat. In diesem Fall hat die Energieversorgungseinheit den definierten Stromfluss auf der Versorgungsleitung korrekt erkannt und funktioniert somit korrekt.

Nachdem der Spannungspegel auf der Energieversorgungsleitung innerhalb der vorbestimmten Zeitspanne den Tiefpegel von beispielsweise 12 V erreicht hat, kann er wieder auf den ursprünglichen Pegel im Leerlauf-Betriebszustand (Mittelpegel) ansteigen. Dies erfolgt, nachdem zu einem dritten Zeitpunkt T3, der beispielsweise nach einem zweiten Zeitintervall 204 von 50 bis 100 µs nach dem zweiten Zeitpunkt T2 liegt, wobei zum dritten Zeitpunkt T3 der Spannungspegel auf der Steuerleitung des SPI-Busses sowie der Steuerleitung TRdrv zu Energieversorgungseinheit vom Mikrocontroller auf den Logikpegel 0 zurückgesetzt wird. Die korrekte Funktion der Energieversorgungseinheit kann auch dann wieder festgestellt werden, wenn der Spannungspegel auf der die Versorgungsleitungen innerhalb eines Toleranzbereichs um den Mittelbereich liegt, der beispielsweise in dem Bereich von 14 V bis 28 V liegt.

Zur Feststellung der korrekten Funktion der Energieversorgungseinheit kann entweder der durch die Messeinheit erfasste tatsächliche Signalverlauf oder einzelner Werte davon abschnittsweise, beispielsweise im ersten Zeitintervall 202 oder im zweiten Zeitintervall 204 oder über die gesamte in Fig. 2c dargestellte Auswertezeit mit dem erwarteten Signalverlauf oder einzelnen Werten davon verglichen werden. Um den Mikrocontroller zu entlasten, kann dieser Vergleich in einem speziellen Modul der Auslöseeinheit implementiert werden. Das Ergebnis kann entweder ansprechend auf ein Ausgabesignal des Mikrocontrollers oder nach Vorliegen in dem betreffenden Modul, beispielsweise ebenfalls über den SPI-Bus an den Mikrocontroller zurückübertragen werden, der dieses Ergebnissignal dann entsprechend ausliest und weiterverarbeitet.

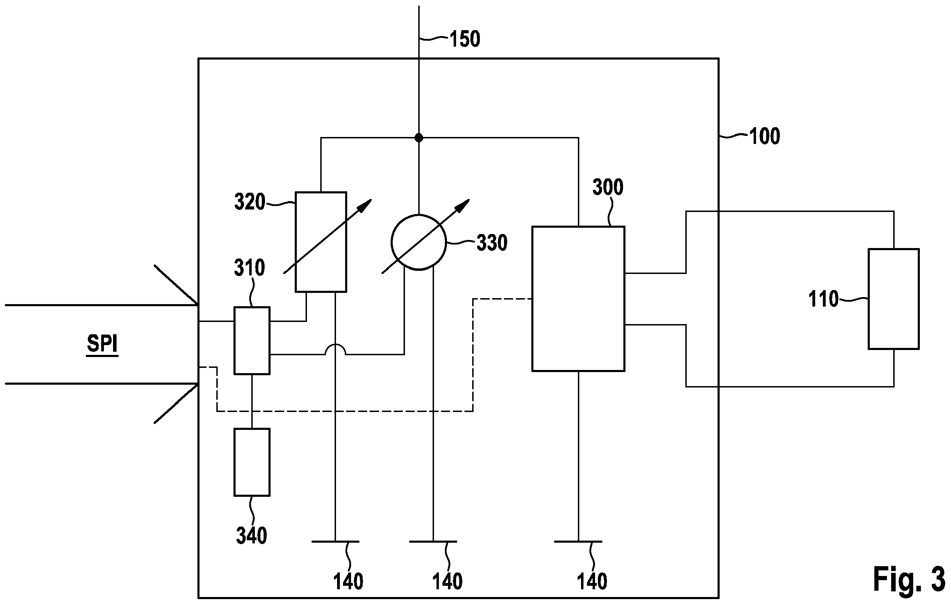

Fig. 3 zeigt eine detailliertere Darstellung der Auslöseeinheit 100 aus Fig. 1. Die Auslöseeinheit 100 ist über die Energieversorgungsleitung 150 mit der Energieversorgungseinheit und über den SPI-Bus mit dem Mikrocontroller verbunden. Die Auslöseeinheit umfasst ein Auslösemodul 300, welches immer realen Einsatz die konkrete Zündung des Personenschutzmittels 110, ansprechend auf ein Signal vom SPI-Bus ausführt. Um nun den vorstehend dargestellten Test der Funktionsweise der Energieversorgungseinheit durchführen zu können, wird über einen SPI-Bus eine Steuereinheit 310 derart angesteuert, dass sie eine Stromsenke 320 mit einer definierten Stromaufnahme zum Auslösemodul 300 parallel schaltet. Für die Messung des Spannungspegels auf der Energieversorgungsleitung 150 wird eine Messeinheit 330 verwendet, die zwischen die Energieversorgungsleitung 150 und die elektrische Masse 140 geschaltet ist. Die Messsignale der Spannungspegel, die von der Messeinheit 330 erfasst werden, werden an die Steuereinheit 310 übertragen und dort mit einem erwarteten Signalverlauf oder einzelnen Werten von solchen erwarteten Signalverlauf verglichen, der aus einem Speicher 340 in die Steuereinheit 310 übertragen wird. In der Steuereinheit 310 wird festgestellt, ob sich der durch die Messeinheit 330 erfasste Spannungspegel auf der Energieversorgungsleitung 150 tatsächlich in dem bestimmten Zeitintervall einem Toleranzbereich um den erwarteten Signalverlauf befindet. Ist dies der Fall, wird auf eine korrekte Funktion der der Energieversorgungseinheit geschlossen.

Der Vorteil eines derartigen Ansatzes besteht darin, dass lediglich durch den Mikrocontroller entsprechende Steuersignale ausgegeben werden brauchen und die korrekte Funktion der Energieversorgungseinheit durch einen Vergleich des gemessenen Spannungsverlaufs auf der Energieversorgungsleitung 150 gegenüber einem erwarteten Spannungsverlauf überprüft werden kann. Wird die korrekte Funktion der Energieversorgungseinheit erkannt, kann dies beispielsweise über den SPI-Bus den Mikrocontroller signalisiert werden.

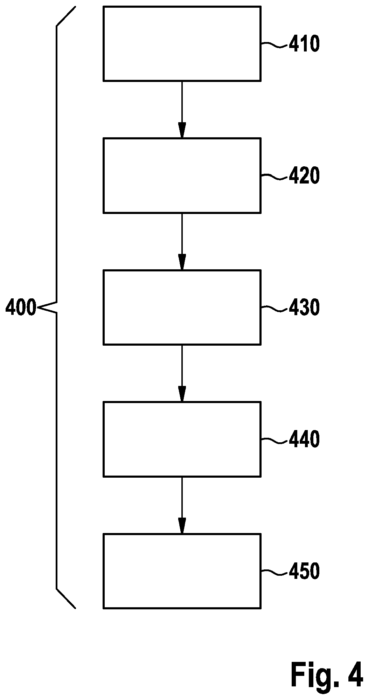

Fig. 4 zeigt ein Ablaufdiagramm eines Ausführungsbeispiels der vorliegenden Erfindung als Verfahren 400 zur Diagnose einer Funktionsfähigkeit einer Energieversorgungseinrichtung für eine Auslöseeinheit eines Personenschutzmittels eines Fahrzeugs. Die Energieversorgungseinrichtung ist über eine Energieversorgungsleitung mit der Auslöseeinheit verbindbar und die Auslöseeinheit weist mit der Energieversorgungsleitung verbindbare Stromsenke mit definierter Stromaufnahme auf. Die die Energieversorgungseinrichtung und die Auslöseeinheit sind ausgebildet, um durch Steuersignale gesteuert zu werden. Das Verfahren 400 umfasst einen Schritt des Startens 410 einer Aufzeichnung eines zeitlichen Verlaufs eines Spannungspegels auf der Energieversorgungsleitung. Weiterhin umfasst das Verfahren 400 ansprechend auf ein erstes Steuersignal, einen Schritt des Einleitens 420 eines Stromflusses durch die Stromsenke in der Auslöseeinheit. Weiterhin umfasst das Verfahren 400 ansprechend auf ein zweites Steuersignal, welches nach einer vorbestimmten Zeitspanne nach dem ersten Steuersignal empfangen wird, einen Schritt des Erhöhens 430 des Spannungspegels auf der Energieversorgungsleitung durch die Energieversorgungseinrichtung. Auch umfasst das Verfahren 400 einen Schritt des Stoppens 440 der Aufzeichnung des zeitlichen Verlaufs des Spannungspegels auf der Energieversorgungsleitung und einen Schritt des Vergleichens 450 des erfassten zeitlichen Verlaufs mit einem erwarteten Spannungsverlauf, wobei die Funktionsfähigkeit der Energieversorgungseinrichtung verifiziert wird, wenn der zeitliche Verlauf innerhalb eines vorbestimmten Toleranzbereichs um den erwarteten Spannungsverlauf liegt.

## Patentansprüche

1. Verfahren (400) zur Diagnose einer Funktionsfähigkeit einer Energieversorgungseinrichtung (ERSW) für eine Auslöseeinheit (100) eines Personenschutzmittels (110) eines Fahrzeugs, wobei die Energieversorgungseinrichtung (ERSW) über eine Energieversorgungsleitung (150) mit der Auslöseeinheit verbunden ist, wobei die Auslöseeinheit eine mit der Energieversorgungsleitung (150) verbundene Stromsenke (320) mit definierter Stromaufnahme aufweist, wobei die Energieversorgungseinrichtung (ERSW) und die Auslöseeinheit (100) ausgebildet sind, um durch Steuersignale (SPI, TRdrv) gesteuert zu werden, aufweisend die folgenden Schritte:
- Starten (410) einer Aufzeichnung eines zeitlichen Verlaufs eines Spannungspegels (Vout) auf der Energieversorgungsleitung (150);
- Ansprechend auf ein erstes Steuersignal (SPI), Einleiten (420) eines Stromflusses durch die Stromsenke (320) in der Auslöseeinheit (100);
- Ansprechend auf ein zweites Steuersignal (TRdrv), welches nach einer vorbestimmten Zeitspanne (202) nach dem ersten Steuersignal (SPI) empfangen wird, Erhöhen (430) oder Erniedrigen des Spannungspegels auf der Energieversorgungsleitung (150) durch die Energieversorgungseinrichtung (ERSW);
- Stoppen (440) der Aufzeichnung des zeitlichen Verlaufs des Spannungspegels auf der Energieversorgungsleitung (150); und
- Zumindest teilweises Vergleichen (450) des erfassten zeitlichen Verlaufs mit einem erwarteten Spannungsverlauf, wobei die Funktionsfähigkeit der Energieversorgungseinrichtung (ERSW) verifiziert wird, wenn der zeitliche Verlauf innerhalb eines vorbestimmten Toleranzbereichs um den erwarteten Spannungsverlauf liegt.

2. Verfahren (400) gemäß Anspruch 1, **dadurch gekennzeichnet, dass** im Schritt des Vergleichens (450) die Funktionsfähigkeit der Energieversorgungseinrichtung (ERSW) verifiziert wird, wenn der Spannungspegel (Vout) vor dem Einleiten (420) des Stromflusses durch die Stromsenke (320) innerhalb des vorbestimmten Toleranzbereichs liegt, wobei sich der vorbestimmte Toleranzbereich vor dem Einleiten des Stromflusses durch die Stromsenke (320) von einem maximalen Mittelpegel bis zu einem minimalen Mittelpegel erstreckt.

3. Verfahren (400) gemäß einem der vorangegangenen Ansprüche, **dadurch gekennzeichnet, dass** im Schritt des Vergleichens (450) die Funktionsfähigkeit der Energieversorgungseinrichtung (ERSW) verifiziert wird, wenn der Spannungspegel (Vout) nach dem Einleiten (420) des Stromflusses durch die Stromsenke (320) innerhalb des vorbestimmten Toleranzbereichs liegt, wobei sich der vorbestimmte Toleranzbereich nach dem Einleiten (420) des Stromflusses durch die Stromsenke (320) von einem maximalen Tiefpegel bis zu einem minimalen Tiefpegel erstreckt und der vorbestimmte Toleranzbereich nach dem Einleiten des Stromflusses durch die Stromsenke (320) innerhalb einer vorbestimmten Zeitspanne (tmin/max) erreicht wird.

4. Verfahren (400) gemäß den Ansprüchen 2 und 3, **dadurch gekennzeichnet, dass** der maximale Tiefpegel unterhalb des minimalen Mittelpegels liegt.

5. Verfahren (400) gemäß einem der vorangegangenen Ansprüche, **dadurch gekennzeichnet, dass** im Schritt des Vergleichens (450) die Funktionsfähigkeit der Energieversorgungseinrichtung (ERSW) verifiziert wird, wenn der Spannungspegel (Vout) nach dem Erhöhen (430) des Spannungspegels (Vout) innerhalb des vorbestimmten Toleranzbereichs liegt, wobei sich der vorbestimmte Toleranzbereich nach dem Erhöhen des Spannungspegels von einem maximalen Hochpegel bis zu einem minimalen Hochpegel erstreckt und der vorbestimmte Toleranzbereich nach dem Erhöhen (430) des Spannungspegels innerhalb einer vorbestimmten Zeitdauer erreicht wird.

6. Verfahren (400) gemäß den Ansprüchen 2 und 5, **dadurch gekennzeichnet, dass** der maximale Mittelpegel niedriger als der minimalen Hochpegels ist.

7. Verfahren (400) gemäß einem der vorangegangenen Ansprüche, **dadurch gekennzeichnet, dass** im Schritt des Vergleichens (450) die Funktionsfähigkeit der Energieversorgungseinrichtung (ERSW) verifiziert wird, wenn der Spannungspegel nach einem Ende (T3) des zweiten Steuersignals (TRdrv) innerhalb des vorbestimmten Toleranzbereichs liegt, wobei sich der vorbestimmte Toleranzbereich nach einem Ende des zweiten Steuersignals (TRdrv) von einem maximalen Mittelpegel bis zu einem minimalen Mittelpegel erstreckt.

8. Verfahren (400) gemäß einem der vorangegangenen Ansprüche, **dadurch gekennzeichnet, dass** die Aufzeichnung des zeitlichen Spannungsverlaufs in der Energieversorgungsleitung (150) und/oder der Schritt des Vergleichens (126) des erfassten zeitlichen Verlaufs mit dem erwarteten Spannungsverlauf in der Auslöseeinheit (100) durchgeführt wird.

9. Vorrichtung (310, 330) zur Diagnose einer Funktionsfähigkeit einer Energieversorgungseinrichtung (ERSW) für eine Auslöseeinheit (100) eines Personenschutzmittels (110) eines Fahrzeugs, wobei die Energieversorgungseinrichtung (ERSW) über eine Energieversorgungsleitung (150) mit der Auslöseeinheit (100) verbunden ist, wobei die Vorrichtung eine mit der Energieversorgungsleitung (150) verbundenen Stromsenke (320) mit definierter Stromaufnahme aufweist, wobei die Energieversorgungseinrichtung (ERSW) und die Auslöseeinheit (100) ausgebildet sind, um durch Steuersignale (SPI, TRdrv) gesteuert zu werden, **dadurch gekennzeichnet, dass** die Vorrichtung (310) die folgenden Merkmale aufweist:
- eine Steuereinheit (310), die ausgebildet ist, um eine Aufzeichnung eines zeitlichen Verlaufs eines Spannungspegels auf der Energieversorgungsleitung zu starten und einen Stromfluss durch die Stromsenke (320) in der Auslöseeinheit einzuleiten, ansprechend auf ein erstes Steuersignal (SPI); und
- eine Messeinheit (330) zum Erfassen einer Erhöhung oder Erniedrigung des Spannungspegels auf der Energieversorgungsleitung (150),
wobei die Steuereinheit (310) ferner ausgebildet ist, um die Aufzeichnung des zeitlichen Verlaufs des Spannungspegels auf der Energieversorgungsleitung (150) zu stoppen und den erfassten zeitlichen Verlauf mit einem erwarteten Spannungsverlauf zu vergleichen, wobei die Funktionsfähigkeit der Energieversorgungseinrichtung (ERSW) verifiziert wird, wenn der zeitliche Verlauf innerhalb eines vorbestimmten Toleranzbereichs um den erwarteten Spannungsverlauf liegt.

10. Computerprogrammprodukt mit Programmcode zur Durchführung des Verfahrens (400) nach einem der Ansprüche 1 bis 8, wenn das Programm auf einer Vorrichtung (310, 330) ausgeführt wird.

## Claims

1. Method (400) for diagnosing a functionality of an energy supply device (ERSW) for a trigger unit (100) of a personal protection means (110) of a vehicle, wherein the energy supply device (ERSW) is connected to the trigger unit via an energy supply line (150), wherein the trigger unit has a current sink (320) with a defined current consumption, said current sink being connected to the energy supply line (150), wherein the energy supply device (ERSW) and the trigger unit (100) are designed to be controlled by control signals (SPI, TRdrv), having the following steps:
- starting (410) a recording of a time profile of a voltage level (Vout) on the energy supply line (150);
- in response to a first control signal (SPI), introducing (420) a flow of current through the current sink (320) in the trigger unit (100);
- in response to a second control signal (TRdrv), which is received after a predetermined period of time (202) after the first control signal (SPI), increasing (430) or decreasing the voltage level on the energy supply line (150) through the energy supply device (ERSW);
- stopping (440) the recording of the time profile of the voltage level on the energy supply line (150); and
- at least partly comparing (450) the detected time profile with an expected voltage profile, wherein the functionality of the energy supply device (ERSW) is verified when the time profile is within a predetermined tolerance range around the expected voltage profile.

2. Method (400) according to Claim 1, **characterized in that**, in the comparison step (450), the functionality of the energy supply device (ERSW) is verified when the voltage level (Vout) before the introduction (420) of the flow of current through the current sink (320) is within the predetermined tolerance range, wherein the predetermined tolerance range before the introduction of the flow of current through the current sink (320) extends from a maximum middle level to a minimum middle level.

3. Method (400) according to either of the preceding claims, **characterized in that**, in the comparison step (450), the functionality of the energy supply device (ERSW) is verified when the voltage level (Vout) after the introduction (420) of the flow of current through the current sink (320) is within the predetermined tolerance range, wherein the predetermined tolerance range after the introduction (420) of the flow of current through the current sink (320) extends from a maximum low level to a minimum low level and the predetermined tolerance range after the introduction of the flow of current through the current sink (320) is achieved within a predetermined period of time (tmin/max).

4. Method (400) according to Claims 2 and 3, **characterized in that** the maximum low level is below the minimum medium level.

5. Method (400) according to one of the preceding claims, **characterized in that**, in the comparison step (450), the functionality of the energy supply device (ERSW) is verified when the voltage level (Vout) after the increase (430) in the voltage level (Vout) is within the predetermined tolerance range, wherein the predetermined tolerance range after the increase in the voltage level extends from a maximum high level to a minimum high level and the predetermined tolerance range after the increase (430) in the voltage level is achieved within a predetermined period.

6. Method (400) according to Claims 2 and 5, **characterized in that** the maximum middle level is lower than the minimum high level.

7. Method (400) according to one of the preceding claims, **characterized in that**, in the comparison step (450), the functionality of the energy supply device (ERSW) is verified when the voltage level after an end (T3) of the second control signal (TRdrv) is within the predetermined tolerance range, wherein the predetermined tolerance range after an end of the second control signal (TRdrv) extends from a maximum middle level to a minimum middle level.

8. Method (400) according to one of the preceding claims, **characterized in that** the recording of the voltage profile over time in the energy supply line (150) and/or the step of comparing (126) the detected time profile with the expected voltage profile is carried out in the trigger unit (100).

9. Apparatus (310, 330) for diagnosing a functionality of an energy supply device (ERSW) for a trigger unit (100) of a personal protection means (110) of a vehicle, wherein the energy supply device (ERSW) is connected to the trigger unit (100) via an energy supply line (150), wherein the apparatus has a current sink (320) with a defined current consumption, said current sink being connected to the energy supply line (150), wherein the energy supply device (ERSW) and the trigger unit (100) are designed to be controlled by control signals (SPI, TRdrv), **characterized in that** the apparatus (310) has the following features:
- a control unit (310), which is designed to start a recording of a time profile of a voltage level on the energy supply line and to introduce a flow of current through the current sink (320) in the trigger unit, in response to a first control signal (SPI); and
- a measurement unit (330) for detecting an increase or decrease in the voltage level on the energy supply line (150),
wherein the control unit (310) is further designed to stop the recording of the time profile of the voltage level on the energy supply line (150) and to compare the detected time profile with an expected voltage profile, wherein the functionality of the energy supply device (ERSW) is verified when the time profile is within a predetermined tolerance range around the expected voltage profile.

10. Computer program product comprising program code for carrying out the method (400) according to one of Claims 1 to 8 when the program is executed on an apparatus (310, 330) .

## Revendications

1. Procédé (400) de diagnostic d'une capacité de fonctionnement d'un dispositif d'alimentation en énergie (ERSW) destiné à une unité de déclenchement (100) d'un moyen de protection d'occupants (110) d'un véhicule, dans lequel le dispositif d'alimentation en énergie (ERSW) est relié à l'unité de déclenchement par l'intermédiaire d'une ligne d'alimentation en énergie (150), dans lequel l'unité de déclenchement comporte un puits de courant (320) qui est relié à la ligne d'alimentation en énergie (150) et présente une consommation de courant définie, dans lequel le dispositif d'alimentation en énergie (ERSW) et l'unité de déclenchement (100) sont conçus pour être commandés par des signaux de commande (SPI, TRdrv), comprenant les étapes suivantes consistant à :
- lancer (410) un enregistrement d'une variation temporelle d'un niveau de tension (Vout) sur la ligne d'alimentation en énergie (150) ;
- en réponse à un premier signal de commande (SPI), déclencher (420) un passage de courant à travers le puits de courant (320) dans l'unité déclenchement (100) ;
- en réponse à un deuxième signal de commande (TRdrv) reçu après une période de temps prédéterminée (202) après le premier signal de commande (SPI), augmenter (430) ou diminuer le niveau de tension sur la ligne d'alimentation en énergie (150) au moyen du dispositif d'alimentation en énergie (ERSW) ;
- arrêter (440) l'enregistrement de la variation temporelle du niveau de tension sur la ligne d'alimentation en énergie (150) ; et
- comparer au moins partiellement (450) la variation temporelle détectée à une variation de tension attendue, dans lequel la capacité de fonctionnement du dispositif d'alimentation en énergie (ERSW) est vérifiée lorsque la variation temporelle se situe dans une plage de tolérance prédéterminée autour de la variation de tension attendue.

2. Procédé (400) selon la revendication 1, **caractérisé en ce que**, lors de l'étape de comparaison (450), la capacité de fonctionnement du dispositif d'alimentation en énergie (ERSW) est vérifiée lorsque le niveau de tension (Vout) avant le déclenchement (420) du passage de courant à travers le puits de courant (320) se situe dans une plage de tolérance prédéterminée, dans lequel la plage de tolérance prédéterminée avant le début du passage de courant à travers le puits de courant (320) s'étend d'un niveau maximal moyen à un niveau minimal moyen.

3. Procédé (400) selon l'une des revendications précédentes, **caractérisé en ce que**, lors de l'étape de comparaison (450), la capacité de fonctionnement du dispositif d'alimentation en énergie (ERSW) est vérifiée lorsque le niveau de tension (Vout) après le déclenchement (420) du passage de courant à travers le puits de courant (320) se situe dans la plage de tolérance prédéterminée, dans lequel la plage de tolérance prédéterminée après le déclenchement (420) du passage de courant à travers le puits de courant (320) s'étend d'un niveau maximal bas à un niveau minimal bas et la plage de tolérance prédéterminée après le déclenchement du passage de courant à travers le puits de courant (320) est atteinte au cours d'une période de temps prédéterminée (tmin/max).

4. Procédé (400) selon les revendications 2 et 3, **caractérisé en ce que** le niveau maximal bas est inférieur au niveau minimal moyen.

5. Procédé (400) selon l'une des revendications précédentes, **caractérisé en ce que**, lors de l'étape de comparaison (450), la capacité de fonctionnement du dispositif d'alimentation en énergie (ERSW) est vérifiée lorsque le niveau de tension (Vout) se situe dans la plage de tolérance prédéterminée après l'augmentation (430) du niveau de tension (Vout), dans lequel la plage de tolérance prédéterminée après l'augmentation du niveau de tension s'étend d'un niveau maximal haut à un niveau minimal haut et la plage de tolérance prédéterminée après l'augmentation (430) du niveau de tension est atteinte au cours d'une période de temps prédéterminée.

6. Procédé (400) selon les revendications 2 et 5, **caractérisé en ce que** le niveau maximal moyen est inférieur au niveau minimal haut.

7. Procédé (400) selon l'une des revendications précédentes, **caractérisé en ce que**, lors de l'étape de comparaison (450), la capacité de fonctionnement du dispositif d'alimentation en énergie (ERSW) est vérifiée lorsque le niveau de tension après une fin (T3) du deuxième signal de commande (TRdrv) se situe dans la plage de tolérance prédéterminée, dans lequel la plage de tolérance prédéterminée après une fin du deuxième signal de commande (TRdrv) s'étend d'un niveau maximal moyen à un niveau minimal moyen.

8. Procédé (400) selon l'une des revendications précédentes, **caractérisé en ce que** l'enregistrement de la variation de tension temporelle sur la ligne d'alimentation en énergie (150) et/ou l'étape de comparaison (126) de la variation de tension temporelle détectée à la variation de tension attendue sont effectués dans l'unité de déclenchement (100).

9. Dispositif (310, 330) de diagnostic d'une capacité de fonctionnement d'un dispositif d'alimentation en énergie (ERSW) pour une unité de déclenchement (100) d'un moyen de protection d'occupants (110) d'un véhicule, dans lequel le dispositif d'alimentation en énergie (ERSW) est relié à l'unité de déclenchement (100) par l'intermédiaire d'une ligne d'alimentation en énergie (150), dans lequel le dispositif comporte un puits de courant (320) qui est relié à la ligne d'alimentation en énergie (150) et présente une consommation de courant définie, dans lequel le dispositif d'alimentation en énergie (ERSW) et l'unité de déclenchement (100) sont conçus pour être commandés par des signaux de commande (SPI, TRdrv),
**caractérisé en ce que** le dispositif (310) présente les caractéristiques suivantes :
- une unité de commande (310) conçue pour lancer un enregistrement d'une variation temporelle d'un niveau de tension sur la ligne d'alimentation en énergie et pour déclencher le passage de courant à travers le puits de courant (320) dans l'unité de déclenchement en réponse à un premier signal de commande (SPI) ; et
- une unité de mesure (330) pour détecter une augmentation ou une diminution du niveau de tension sur la ligne d'alimentation en énergie (150),
dans lequel l'unité de commande (310) est en outre conçue pour arrêter l'enregistrement de la variation temporelle du niveau de tension sur la ligne d'alimentation en énergie (150) et comparer la variation temporelle détectée à une variation de tension attendue, dans lequel la capacité de fonctionnement du dispositif d'alimentation en énergie (ERSW) est vérifiée lorsque la variation temporelle se situe dans une plage de tolérance prédéterminée autour de la variation de tension attendue.

10. Produit de programme informatique comportant un code de programme destiné à mettre en oeuvre le procédé (400) selon l'une des revendications 1 à 8 lorsque le programme est exécuté sur un dispositif (310, 330).
